# FASCICULE DE BREVET EUROPEEN

(11) **EP 1 480 888 B1**
(45) Date de publication et mention de la délivrance du brevet: **25.10.2006**
(21) Numéro de dépôt: 03718868.7
(22) Date de dépôt: 13.02.2003
(51) Int. Cl.: B65D 21/02, B65D 83/14, B65B 7/28, B65B 43/44, B65G 59/04, B65G 59/10

(54) **Procédé de farbrication d'une bombe aérosol**
Verfahren zur Herstellung einer Aerolsoldose
Method of producing an aerosol container

(30) Priorité: 27.02.2002 FR 0202451
(43) Date de publication de la demande: 01.12.2004
(73) Titulaire: Marroncles, Marie-Noelle, 94100 Saint-Maur (FR)
(72) Inventeur: Marroncles, Marie-Noelle, 94100 Saint-Maur (FR)
(74) Mandataire: Kohn, Philippe
(86) Numéro de dépôt international: PCT/FR2003/000459
(87) Numéro de publication internationale: WO 2003/072445

(56) Documents cités:
- FR-A- 1 359 873
- GB-A- 697 043
- GB-A- 851 559
- US-A- 2 412 178
- US-A- 2 799 435
- US-A- 3 784 064
- US-A- 4 366 696
- US-A- 4 729 206
- US-A- 5 061 140
- PATENT ABSTRACTS OF JAPAN vol. 013, no. 290 (C-614), 5 juillet 1989 (1989-07-05) -& JP 01 085161 A (OSAKA EYAZOOLE KOGYO KK), 30 mars 1989 (1989-03-30)

## Description

La présente invention concerne un procédé de fabrication d'une bombe aérosol.

Dans l'état de la technique, il est connu de réaliser des conditionnements de produits en vrac comme des produits alimentaires, des produits vétérinaires, des produits cosmétiques, des produits chimiques ou autres dans des conteneurs fermés comportant un boîtier de forme cylindrique, dont une extrémité est dotée d'un ouverture qui, quand le conditionnement n'est pas utilisé, est dans un état fermé, étanche notamment.

En particulier de tels boîtiers sont connus dans les industries du conditionnement sous forme de bombes aérosol, composées d'un boîtier allongé à l'intérieur duquel sera rempli un produit à distribuer. Le boîtier présenté à l'entrée d'une machine de conditionnement présente une ouverture. Il est donc d'abord rempli avec le produit à distribuer, puis fermé par une valve de diffusion. Une fois le produit chargé dans la bombe aérosol, la manipulation de la valve par l'utilisateur permet de réaliser la diffusion du produit. Ces produits sont très utilisés dans les industries cosmétiques, agroalimentaires et chimiques pour distribuer des produits sous pression, sous forme de brouillard ou sous forme de solution comme des peintures ou des vernis ou des laques.

Du fait de la spécialisation des industries et des quantités extrêmement élevées de tels produits sous forme de conditionnements divers, la fabrication des boîtiers, des coupelles et des valves est réalisée dans des lieux différents.

Par exemple, dans l'industrie de production des bombes aérosol, il est connu de faire fabriquer dans un lieu le boîtier, généralement réalisé en un matériau métallique, fabriqué sous forme cylindrique, et dans un autre lieu un moyen de distribution du produit à diffuser à l'aide de la bombe aérosol comme une valve et sa coupelle porte-valve.

Particulièrement, le boîtier cylindrique est produit en grandes quantités. Il est ensuite chargé dans des caisses de conditionnement, et transporté par la route. De tels chargements présentent une faible masse volumique, les caisses de boîtiers cylindriques étant pratiquement vides, du fait que les boîtiers vides sont rangés côte à côte. Il en résulte un coût de transport élevé si on le rapport au coût de fabrication d'un conteneur.

Quand le chargement de boîtiers cylindriques est présenté à l'entrée d'une machine de conditionnement pour produire des conteneurs, un chargeur permet de transférer une série de boîtiers vides et de présenter chacun d'eux en séquence devant un poste de remplissage, puis de poser et de fixer une coupelle porte-valve et une valve de distribution et enfin de disposer le conteneur rempli et fini dans son propre conditionnement pour être évacué vers un lieu d'utilisation.

C'est un but de la présente invention de réduire le coût de fabrication d'un conteneur.

En effet, la présente invention concerne un procédé de fabrication d'une bombe aérosol, du type comportant un boîtier présentant au moins une ouverture adaptée à recevoir un moyen de fermeture. Le procédé de l'invention est caractérisé en ce que le boîtier est initialement fabriqué de sorte que son profil, permet son empilement, un boîtier pouvant être inséré sur une part importante de sa longueur à travers l'ouverture du boîtier immédiatement précédent dans une pile quand plusieurs boîtiers sont empilés, de façon à réduire le volume occupé dans des caisses de conditionnement des boîtiers avant leur stockage et/ou leur transport vers une machine de remplissage, puis qu'ultérieurement, les piles de boîtiers sont dépilées pour que chaque boîtier puisse être équipé d'au moins un moyen de fermeture étanche, solidarisé de ladite ouverture du boîtier, puis rempli d'un produit sous forte pression.

Un avantage de cette disposition est en particulier que, sauf pour le boîtier inférieur de l'empilement, premier boîtier dans l'empilement, tous les autres boîtiers sont essentiellement protégés à l'intérieur des autres boîtiers, ce qui permet de réduire les risques de rayures sur les surfaces extérieures des dits boîtiers. De ce fait, il est en particulier possible de réaliser un dépôt extérieur et / ou intérieur d'une couche ou d'un revêtement, particulièrement d'un revêtement comportant un message publicitaire ou d'identification du produit futur qui sera disposé dans la boîte ultérieurement.

Les différents éléments permettant de réaliser la production de tels produits sont aussi concernés par l'invention ainsi qu'il sera décrit à l'aide de la description des figures annexées qui sont :
- la figure 1 : un schéma en coupe d'un boîtier réalisé selon l'invention;
- la figure 2 est un schéma de la sortie d'une chaîne de fabrication de boîtiers selon un mode de réalisation préféré de l'invention;
- les figures 3a et 3b sont respectivement une vue de dessus et une vue de face en coupe d'une caisse de conditionnement de piles de plusieurs boîtiers coniques une fois qu'ils ont été fabriqués, à la sortie de la chaîne de fabrication des boîtiers de la figure 1;
- la figure 4 est une vue schématique de la partie de chargement à l'entrée d'une machine de conditionnement de conteneurs utilisant des boîtiers fabriqués selon l'invention;
- la figure 5 représente une vue schématique d'une machine de conditionnement de conteneurs qui reçoit les boîtiers empilables d'une caisse de conditionnement réalisée selon les figures 1 à 3 ;
- les figures 6 et 7 sont deux demies vues en coupe schématique de boîtiers empilables, lors de leur utilisation au cours de la fabrication d'un conteneur réalisé sous forme d'une bombe aérosol.

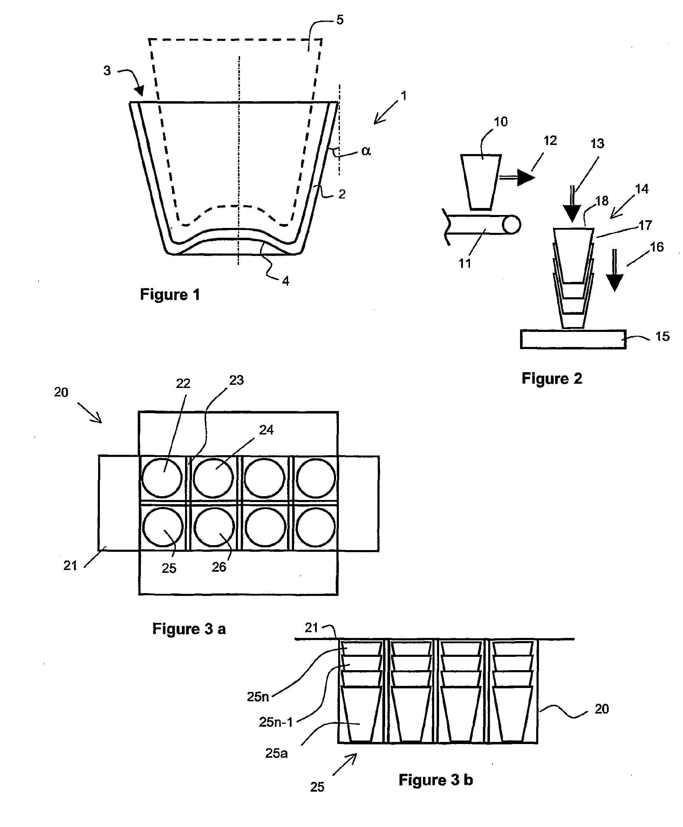

A la figure 1, on a représenté un mode de réalisation préféré de l'invention. Dans une chaîne de production d'un boîtier empilable selon l'invention, une pastille en fer blanc, ou en un autre matériau formable, de forme sensiblement plate est présentée à partir d'un poste d'approvisionnement en pastilles. Un outil 5 permet de conformer en creux la pastille de façon à constituer le boîtier empilable 1. Le boîtier empilable 1 présente des parois latérales 2 qui sont inclinées d'un angle prédéterminé a sur la verticale du dessin. Le boîtier empilable 1 présente une ouverture 3 sur sa partie supérieure. Cette ouverture 3 permet lors de la fabrication le passage de l'outil de presse 5.

L'outil de presse 5 coopère avec une matrice de formage (non représentée) de sorte que le fond 4 du boîtier 1 présente un aspect bombé selon des rayons de courbure déterminés selon les règles de l'art pour permettre de réaliser avec de très faibles épaisseurs de matériau un boîtier résistant à la pression lorsque il est utilisé dans un conteneur dans lequel un produit à diffuser est rempli sous pression.

Dans le cas où le boîtier empilable 1 de la figure 1 est destiné à la fabrication d'une bombe aérosol, une coupelle porte-valve et une valve sont ultérieurement posées au-dessus de l'ouverture 3.

Diverses formes empilables sont possibles. Particulièrement, une forme conique, telle que représentée à la figure 1, permet de réaliser l'objectif de l'invention de réaliser des empilements de boîtiers comme le boîtier 1, les uns au-dessus des autres. Dans ce cas, la section du boîtier peut être sensiblement circulaire et l'ouverture étant disposée du côté du tronc de cône de plus fort diamètre.

A la figure 2, on a représenté un empilement de plusieurs boîtiers coniques réalisés comme le boîtier empilable de la figure 1.

A la sortie de la chaîne de production du boîtier empilable de la figure 1, un tapis roulant 11 porte selon le mouvement 12 un boîtier posé verticalement sur le tapis. Une pile 14 de boîtiers coniques en cours d'empilement sur un plateau 15 est représentée, l'ouverture 18 du dernier boîtier de l'empilement 17 étant dirigée vers le haut de sorte que, lorsque un bras ou une étoile de transfert fait passer le boîtier conique 10 sur le haut de l'empilement, le boîtier 10 vient s'ajouter à la pile des divers boîtiers de l'empilement 14. De façon à assurer un empilement correct, le plateau 15 est animé à chaque arrivée d'un nouveau boîtier d'un mouvement de descente selon la flèche 16.

On constate ainsi qu'il est possible, en fonction des caractéristiques géométriques des boîtiers empilables, de réaliser des empilements de boîtiers vides dans des conditionnements convenables avec une densité ou nombre de boîtiers par unité de volume de conditionnement élevé(e).

On constate ainsi qu'il est possible que la majeure partie des faces extérieures et intérieures des boîtiers empilés soient protégés les uns par les autres à l'exception de la face extérieure du boîtier empilable du bas de la pile et de la face intérieure du boîtier empilable du haut de la pile.

Dans une disposition particulière de l'invention, avant que le boîtier empilable 10 soit amené sur l'empilement 14, il est traité sur un poste permettant de réaliser le recouvrement de ses faces intérieure et/ou extérieure à l'aide de revêtements de traitements divers et particulièrement par l'application de messages publicitaires, commerciaux ou réglementaires, de marquage de produits et, particulièrement, du conteneur final qui sera ultérieurement réalisé ainsi qu'il sera décrit plus loin.

On a représenté deux vues qui sont, respectivement, à la figure 3a, une vue de dessus et à la figure 3b, une vue de face en coupe partielle, d'une caisse de conditionnement comportant plusieurs rangées d'empilements comme l'empilement de boîtiers empilables de la figure 2.

Dans les figures 3a et 3b, les mêmes éléments portent les mêmes numéros de référence et ne sont pas plus décrits.

La caisse de conditionnement 20 est par exemple une caisse de conditionnement à rabats dite caisse américaine comportant quatre rabats comme le rabat 21 pour réaliser la fermeture de la caisse qui est ensuite scellée par exemple avec une bande adhésive.

A l'intérieur de la caisse sont disposées deux rangées de quatre empilements, chacun séparés les uns des autres par des cloisons 23, par exemple en carton épais, de sorte que chaque empilement est protégé par une paroi en carton contre les chocs et les frottements qui pourraient apporter des rayures ou des déformations sur les boîtiers.

Les empilements 22, 24 et 26 sont répétés autant de fois qu'il est nécessaire dans des caisses américaines adaptées à cet effet. A la figure 3b, on a représenté une vue en coupe de la caisse 20, rabat 21 ouvert avec une coupe partielle, qui permet de voir en vue extérieure un empilement comportant un boîtier inférieur 25a et jusqu'à l'avant dernier boîtier 25n-1, qui est le dernier boîtier conique de l'empilement 25. De la sorte, on remarque que plusieurs boîtiers coniques occupent un espace réduit par rapport à l'espace des caisses de conditionnement dans l'état de la technique, chaque boîtier étant posé sur un flan en carton et son volume étant entièrement vide.

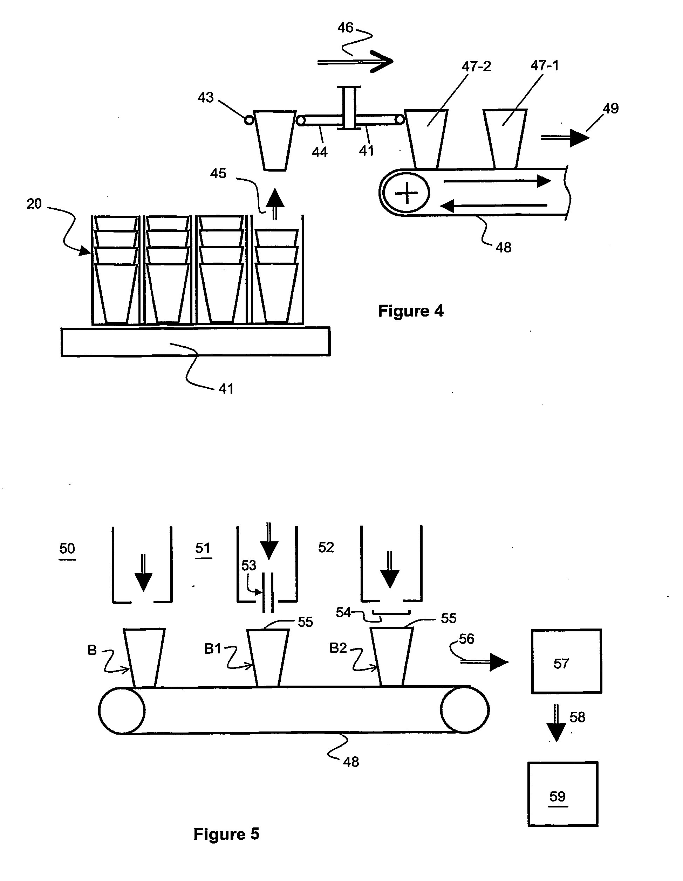

A la figure 4, on a représenté un chargeur de boîtiers coniques produits selon un mode de réalisation des figures 1 à 3. Une caisse de conditionnement, comme la caisse 20 de la figure 3b, est déchargée, par exemple manuellement, par piles successives comme la pile 42 sur un tapis roulant de transfert 41 selon la flèche d'avancement 40. Un outil de préhension 43 du premier boîtier disponible de l'empilement 42 est disposé de façon à prélever un boîtier ouverture dirigée vers le haut. Dans un mode préféré de réalisation, le boîtier conique est réalisé en fer blanc qui est un corps magnétique. Il en ressort que l'outil de préhension 43 peut comporter un patin magnétique qui permet de prendre fermement le boîtier du haut de l'empilement et de le charger selon la flèche 45 dans un bras de transfert 44 qui réalise son transfert selon la flèche 46, puis son arrivée sur un tapis roulant 48 de transfert vers un poste de remplissage selon la flèche 49. On remarque que, sur le tapis 48 qui est le début de la machine de conditionnement de conteneurs selon l'invention, le boîtier 47-1 ou 47-2, encore vide, est présenté avec son ouverture ouverte vers le haut, ce qui permet l'introduction du produit, puis la pose du couvercle ou de la coupelle porte-valve sur cette ouverture 47.

Dans un autre mode de réalisation de boîtier empilable selon le principe de l'invention, l'ouverture à travers laquelle le boîtier suivant sera empilé est destinée à recevoir un fond rapporté, comportant une partie sensiblement perpendiculaire à l'axe de l'empilement et une partie de fixation au corps conique du boîtier empilable.

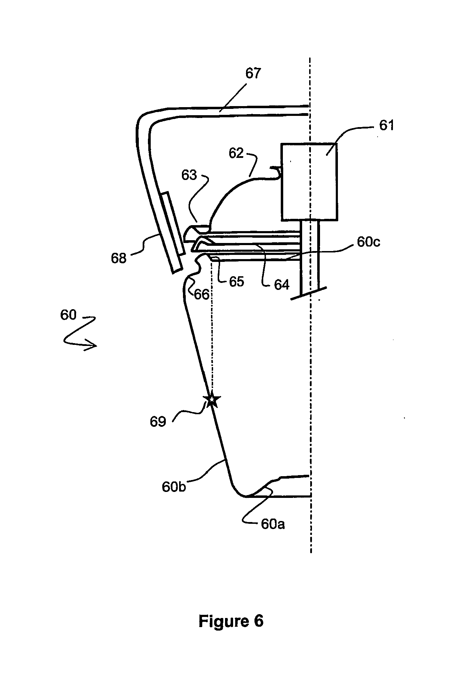

A la figure 5, on a représenté un mode de réalisation d'une machine de conditionnement apte à traiter des boîtiers empilables selon l'invention pour produire, remplir et conditionner des conteneurs comme des bombes aérosol.

Après le prélèvement dans la pile de boîtiers empilables et le placement par un poste d'approvisionnement 50 sur un tapis de transport 48, par exemple celui de la figure 4, des boîtiers B, B1, B2 se déplacent séquentiellement devant un poste de remplissage 51, un poste de pose d'un couvercle 52, un poste de sertissage 57 du couvercle sur le boîtier rempli et un poste de conditionnement 59 d'un lot de conteneurs remplis et fermés.

Un tel conteneur peut être :
- une boîte de boisson ;
- une boîte de conserve ;
- une bombe aérosol.

Déposé sur le tapis 48 par le chargeur de la figure 4, le boîtier B passe ensuite en position B1 sous un poste de remplissage 51. A cet effet, un bec de remplissage 53 est placé en relation avec l'ouverture 55 du boîtier à remplir. Quand il commence l'opération de remplissage, un contrôleur (non représenté) prend en compte les paramètres physiques du produit de remplissage (densité, fluidité ou viscosité) ainsi que des paramètres géométriques du boîtier de sorte que le produit de remplissage soit inséré dans le boîtier vide dans un temps minimum, sans que le bec de remplissage ne soit souillé par le produit, ni que ce dernier ne soit mélangé avec l'atmosphère ambiante au poste de remplissage. En particulier, le bec 53 de remplissage peut être abaissé à l'intérieur du boîtier à remplir en position B1. Puis le remplissage commence. Le bec 53 se relève progressivement sous l'action d'un chariot motorisé sous le contrôle du contrôleur précité de remplissage de sorte que le remplissage se fasse sans bulle ni émulsion et sans que le bec ne soit souillé puisqu'il suit le remplissage au-dessus du niveau de remplissage.

A la fin du remplissage, le boîtier passe, entraîné par le tapis 48, en position B2 sous un poste 52 de pose d'un couvercle 53 sur l'ouverture 55 du boîtier rempli.

Après la pose du couvercle de fermeture, le boîtier est transféré par un moyen de transfert convenable 56 vers un poste de sertissage 57 de couvercle ou d'une autre opération adaptée à rendre sûre la fixation du couvercle de fermeture au corps du boîtier rempli de sorte que le couvercle et ce dernier soient fixés de manière permanente.

Selon les techniques de remplissage et la nature du boîtier et /ou du couvercle 53, l'opération de pose de couvercle et l'opération de sertissage sont exécutées sur le poste de remplissage à l'aide d'un outil complexe connu de l'homme de métier. Ce sera notamment le cas pour le remplissage d'une bombe aérosol dont la coupelle porte-valve qui fait partie du couvercle de fermeture du boîtier est disposée en relation avec l'ouverture 55 dudit boîtier. Plusieurs becs de remplissage sont dirigés à travers l'ouverture 55 pourtant partiellement obstruée par la coupelle porte-valve et par la valve associée à la coupelle porte-valve.

Dans un mode de réalisation d'un conteneur comme une bombe aérosol, le diamètre d'ouverture du boîtier est une caractéristique importante pour permettre le remplissage à des cadences élevées. En effet, dans l'état de la technique, la valve de diffusion est prise sur un diamètre le plus petit possible et elle est alors disposée sur une pièce intermédiaire qui permet de l'adapter à des boîtiers d'ouvertures cylindriques diverses allant de cette dimension la plus petite jusqu'à des dimensions plus importantes. Selon l'invention, la coupelle porte-valve étant du diamètre le plus grand peut permettre de placer des becs de remplissage de taille plus importante et donc d'accélérer et de faciliter le remplissage du boîtier.

A la figure 6, on a représenté un conteneur à titre d'exemple de réalisation sous forme d'une bombe aérosol sur la base d'un boîtier empilable selon l'invention. Le boîtier empilable 60 a été formé en une seule opération avec un fond 60a et un corps 60b à paroi latérale, avec une ouverture supérieure 60c de grand diamètre.

Une coupelle porte-valve 62, spécialement conçue pour ce type de boîtier, est produite à partir d'une plaque en un matériau rigide et est formée de manière à s'adapter par sertissage au bord de l'ouverture 60c du boîtier 60.

A cette fin, les bords homologues de la coupelle 62 et du boîtier 60 sont pliés, en demi-cercles emboîtés respectivement 65 et 63 sur la demie coupe de la figure 6 et séparés par un joint 64 en matériau plastique posé sous forme fluide par un pistolet de pose et qui sert à l'étanchéité et, le cas échéant, à la fixation permanente de la coupelle 62 sur le boîtier 60.

La coupelle porte-valve 62 est de forme bombée, par exemple, en demie sphère dont le sommet est percé d'une ouverture avec un repli convenable de la matière pour constituer un support du bouton de manipulation d'une valve 61 de projection du produit qui est rempli dans la bombe aérosol après que la coupelle porte-valve 62 ait été solidarisée du boîtier 60.

On remarque que cette disposition évite de disposer une pièce intermédiaire entre la coupelle porte-valve et le boîtier 60 comme c'est le cas quand, dans l'état de la technique, on produit un seul diamètre de coupelle porte-valve et que les boîtiers utilisés ont des diamètres différents. Selon l'invention, la coupelle porte-valve 62 est d'une forme adaptée au bord 65 de l'ouverture 60c du boîtier empilable 60.

Par ailleurs, notamment pour permettre la pose d'un capot ou d'un couvercle de fermeture et/ou de protection de la valve proprement dite, il est prévu un pliage supplémentaire 66 qui permet d'augmenter la dimension horizontale au dessin de la bombe aérosol de façon à permettre d'y loger l'épaisseur dudit capot 67.

Le capot 67 comporte une partie 68 de connexion au boîtier 60 dans la zone du pliage 66 de sorte que la partie correspondante 68 du capot et la paroi 60b se trouvent en prolongement l'une de l'autre quand le capot ou couvercle 67 est posé sur la bombe aérosol.

A la figure 6, on a représenté, à l'aide de la ligne de rappel verticale la zone de contact du boîtier 60 lorsqu'il est empilé sur un boîtier identique dans une pile. On remarque que le point 69 est d'autant plus proche de l'ouverture 60c que la pente de la forme conique est proche de la verticale. On remarque donc que la densité d'empilage dépend de l'angle maximum d'inclinaison des boîtiers.

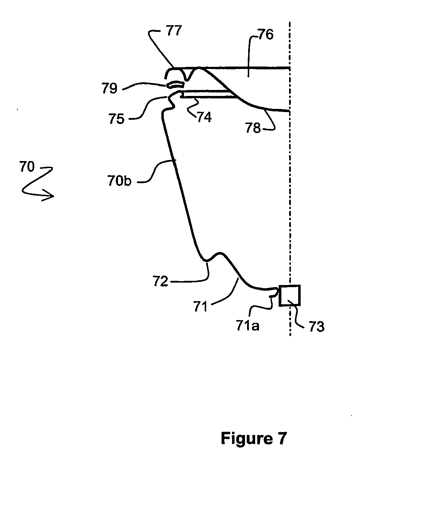

Dans un autre mode de réalisation d'une bombe aérosol représenté à la figure 7, au lieu que ce soit le fond 60a qui soit intégral avec le corps latéral 60b du boîtier 60, la coupelle porte-valve 62 vient en une seule pièce avec le corps latéral 60b du boîtier 60.

Dans ce mode de réalisation, le boîtier empilable 70 est sous forme d'un tronc de cône inversé par rapport au mode de réalisation de la figure 6. La partie inférieure 71 est adaptée en forme de coupelle porte-valve et est destinée à recevoir une valve 73. La valve 73 peut, dans une première variante de réalisation, être montée lors de la fabrication du boîtier empilable. L'ensemble est alors empilé en au moins une pile, conditionné en caisses et stocké et/ou transporté vers la machine de remplissage décrite ci-dessus.

Dans une seconde variante, seul le logement 71a de support et de passage de la valve 73 est formé avec la partie intégrale de coupelle 71. Le boîtier 70, une fois formé, est empilé en piles conditionnées par l'ouverture supérieure 74. Stocké et/ou transporté, il est ensuite chargé sur la machine de remplissage de sorte qu'il est tout d'abord muni de la valve 73 proprement dite, à travers le logement 71 a prévu à cet effet.

En revenant au mode de réalisation du boîtier empilable de la figure 7, par l'ouverture 74 dont le bord est convenablement formé avec un rebord de sertissage 75, on vient disposer un couvercle de fermeture 76 de forme bombée ainsi qu'il est connu dans la technique de fabrication des bombes aérosol. Le rebord de sertissage réciproque 77 est placé au-dessus d'un joint cylindrique 79 d'une matière comme une matière initialement fluide, servant de joint d'étanchéité et/ou de colle de fixation permanente. L'ensemble est alors fixé et la bombe est constituée par exemple après avoir été remplie de manière connue à travers la valve 73, une fois la bombe disposée devant un poste de remplissage.

L'homme de métier est libre de choisir une pente déterminée à la forme conique ou tronconique qui lui convient en tenant compte de la contrainte d'empilement de l'invention. En particulier, il peut chercher la plus petite pente de la forme tronconique qui assure le meilleur coefficient d'empilement d'un empilement de boîtiers vides selon ce qui a été enseigné plus haut.

Il est clair que des formes plus complexes pour le corps du boîtier sont possibles. Particulièrement, les génératrices 62 du corps tronconique peuvent ne pas être générées par l'appui d'une même droite ou segment de droite, mais par une pluralité de segments de pentes différentes, pentes qui respectent la contrainte d'empilement des boîtiers. Ces formes sont à la discrétion de l'homme de métier, selon notamment la nature du produit de remplissage et le mode d'utilisation de la bombe aérosol. De même, les génératrices peuvent ne pas être constituées par un ou plusieurs segments de droite, mais par des segments de courbe déterminés selon la contrainte d'empilement des boîtiers.

Les mêmes caractéristiques géométriques se rapportent aussi au corps de boîtes de boisson, de produits liquides, pâteux, fluides ou semi-fluides, de tout genre et nature, chimique ou autre.

## Revendications

1. Procédé de fabrication d'une bombe aérosol, du type comportant un boîtier présentant au moins une ouverture adaptée à recevoir un moyen de fermeture, **caractérisé en ce que** le boîtier est initialement fabriqué de sorte que son profil permet son empilement, un boîtier pouvant être inséré sur une part importante de sa longueur à travers l'ouverture du boîtier immédiatement précédent dans une pile quand plusieurs boîtiers sont empilés, de façon à réduire le volume occupé dans des caisses de conditionnement des boîtiers avant leur stockage et/ou leur transport vers une machine de remplissage, puis qu'ultérieurement, les piles de boîtiers sont dépilées pour que chaque boîtier puisse être équipé d'au moins un moyen de fermeture étanche, solidarisé de ladite ouverture du boîtier, puis rempli d'un produit sous forte pression.

2. Procédé selon la revendication 1, **caractérisé en ce que** ledit boîtier est réalisé à partir d'une pastille en fer blanc, ou en un autre matériau formable, de forme sensiblement plate à l'aide d'un outil (5) pour conformer en creux la pastille de façon à constituer un boîtier empilable (1).

3. Procédé selon l'une des revendications précédentes, **caractérisé en ce que** le boîtier empilable (1) présente des parois latérales (2) qui sont chacune inclinée d'au moins un angle prédéterminé sur la verticale et **en ce qu'**il présente au moins une ouverture (3).

4. Procédé selon l'une des revendications précédentes, **caractérisé en ce que** le boîtier présente une forme conique, la section du boîtier étant sensiblement circulaire et l'ouverture (3) étant disposée du côté du tronc de cône de plus fort diamètre.

5. Procédé selon l'une des revendications précédentes, **caractérisé en ce que**, avant que le boîtier empilable (10) soit amené sur un empilement (14), il est traité sur un poste permettant de réaliser le recouvrement de ses faces intérieure et/ou extérieure à l'aide de revêtements de traitements divers et particulièrement par l'application de messages publicitaires, commerciaux ou réglementaires, de marquage de produits et, particulièrement, du conteneur final qui sera ultérieurement réalisé ainsi qu'il sera décrit plus loin.

6. Procédé selon l'une des revendications précédentes, **caractérisé en ce qu'**il est chargé à partir de conditionnements en piles à l'aide d'un chargeur de dépilage à l'entrée d'une machine de remplissage.

7. Procédé selon l'une des revendications précédentes, **caractérisé en ce qu'**il consiste à injecter un produit à distribuer à travers un moyen de distribution associé au boîtier empilable.

8. Procédé selon la revendication 7, **caractérisé en ce qu'**il consiste à solidariser au boîtier à titre de moyen de fermeture une coupelle porte-valve (62), spécialement conçue pour ce type de boîtier, produite à partir d'une plaque en un matériau rigide et formée de manière à s'adapter par sertissage au bord de l'ouverture (60c) du boîtier (60), les bords homologues de la coupelle (62) et du boîtier (60) étant pliés en demi cercles emboîtés (65, 63) séparés par un joint en matériau plastique (64), la coupelle porte-valve étant destinée à être équipée d'une valve (61) de projection du produit qui est rempli dans la bombe aérosol après que la coupelle porte-valve (62) ait été solidarisée du boîtier (60).

9. Procédé selon la revendication 8, **caractérisé en ce qu'**il consiste à produire un capot ou couvercle de fermeture et/ou de protection de la valve proprement dite, qui coopère avec un pliage supplémentaire (66) qui permet d'augmenter la dimension horizontale au dessin de la bombe aérosol de façon à permettre d'y loger l'épaisseur dudit capot (67).

10. Procédé selon l'une des revendications 7 à 9, **caractérisé en ce qu'**il consiste à former sur le boîtier empilable (70) une partie (71) adaptée en forme de coupelle porte-valve destinée à recevoir une valve (73).

11. Procédé selon l'une des revendications 7 à 10, **caractérisé en ce qu'**il consiste à pratiquer sur le boîtier (70) une ouverture (74) dont le bord présente un rebord de sertissage (75), recevant un couvercle de fermeture (76) de forme bombée, le rebord de sertissage réciproque (77) coopérant avec un joint cylindrique (79) d'une matière comme une matière initialement fluide, servant de joint d'étanchéité et/ou de colle de fixation permanente.

## Claims

1. Method for making an aerosol can, of a type comprising a box having at least an aperture provided to receive a closing means, **characterized in that** the box is initially produced, according to a profile allowing it to be stacked, a box being capable of being inserted over a large proportion of its length through the orifice of the box immediately preceding it in a stack when a plurality of boxes are stacked, so as to reduce the volume occupied in packing cases for the boxes before their storage and/or transport toward a machine for their filling, the stack of boxes are unstacked in order that each box can be equipped with at least a sealproof closing means, secured to each aperture of the box, then filled with a high pressure product.

2. The method as claimed in claim 1, **characterized in that** the box is produced from a pellet consisting of tin plate or of another formable material, with a substantially flat shape, with the aid of a tool (5) for giving the pellet a hollow shape so as to form a stackable box (1).

3. The method as claimed in one of the preceding claims, **characterized in that** the stackable box (1) has side walls (2) which are each inclined at least one predetermined angle to the vertical, and **in that** it has at least one orifice (3).

4. The method as claimed in one of the preceding claims, **characterized in that** the box has a conical shape, the cross section of the box being substantially circular, and the orifice (3) being arranged on the side of largest diameter of the cone frustum.

5. The method as claimed in one of the preceding claims, **characterized in that**, before the stackable box (10) is delivered onto a stack (14), it is processed at a station making it possible to carry out the coating of its inner and/or outer faces with the aid of coatings of various treatments and particularly by the application of publicity, commercial or statutory messages, or for the marking of products and, in particular, of the final container which will subsequently be produced, as will be described later.

6. The method as claimed in one of the preceding claims, **characterized in that** it is loaded from packs in the form of stacks with the aid of an unstacking loader at the entrance of a filling machine.

7. The method as claimed in one of the preceding claims, **characterized in that** it consists in injecting a product to be dispensed through a dispensing means associated with the stackable box.

8. The method as claimed in claim 7, **characterized in that** it consists in securing to the box as a closing means a valve carrier cap (62) specially designed for this type of box produced from a sheet consisting of a rigid material, and formed so as to be fitted by crimping to the edge of the orifice (60c) of the box (60), the matching edges of the cap (62) and of the box (60) being bent in interlocked semicircles (65, 63) separated by a plastic seal (64), the valve carrier cap being intended to be equipped with a valve (61) for the projection of the product which is filled in the aerosol can, after the valve carrier cap (62) has been secured to the box (60).

9. The method as claimed in claim 8, **characterized in that** it consists in producing a cowl or cover for closing and/or protecting the actual valve, which cooperates with an additional bend (66) which makes it possible to increase the horizontal dimension of the aerosol can in the drawing, so as to make it possible to accommodate the thickness of said cowl (67) therein.

10. The method as claimed in one of claims 7 to 9, **characterized in that** it consists in forming on the stackable box (70) a part (71) designed in the form of a valve carrier cap intended for receiving a valve (73).

11. The method as claimed in one of claims 7 to 10, **characterized in that** it consists in making on the box (70) an aperture (74), the edge of which has a crimping rim (75) receiving a closing cover (76) of convex shape, the reciprocal crimping rim (77) cooperating with a cylindrical seal (79) consisting of a material, such as an initially fluid material, serving as a leaktightness seal and/or as a permanent fixing adhesive.

## Patentansprüche

1. Verfahren zum Herstellen einer Aerosoldose mit einem Gehäuse, das mindestens eine Öffnung aufweist, die geeignet ist, ein Verschlussmittel aufzunehmen, **dadurch gekennzeichnet, dass** das Gehäuse ursprünglich so hergestellt ist, dass sein Profil seine Stapelung ermöglicht, wobei, wenn mehrere Gehäuse gestapelt sind, ein Gehäuse über einen großen Teil seiner Länge durch die Öffnung des in einem Stapel unmittelbar vorangegangenen Gehäuses eingeführt werden kann, so dass das in den Verpackungskisten der Gehäuse eingenommene Volumen vor ihrer Lagerung und/oder ihrem Transport zu einer Füllmaschine reduziert wird, und dass anschließend die Gehäusestapel entstapelt werden, damit jedes Gehäuse mit mindestens einem fest mit der Öffnung des Gehäuses verbundenen, undurchlässigen Verschlussmittel ausgestattet werden kann, und dann unter Hochdruck mit einem Produkt befüllbar ist.

2. Verfahren gemäß Anspruch 1, **dadurch gekennzeichnet, dass** das Gehäuse aus einer Weißblechscheibe oder einem anderen im Wesentlichen flächig geformten, umformbaren Material mittels eines Werkzeugs (5) zum Ausformen der Scheibe zu einem stapelbaren Gehäuse (1) hergestellt wird.

3. Verfahren gemäß einem der vorhergehenden Ansprüche, **dadurch gekennzeichnet, dass** das stapelbare Gehäuse (1) Seitenwände (2) aufweist, die jeweils mindestens um einen vorbestimmten Winkel zur Vertikalen geneigt sind, und dass es mindestens eine Öffnung (3) aufweist.

4. Verfahren gemäß einem der vorhergehenden Ansprüche, **dadurch gekennzeichnet, dass** das Gehäuse eine konische Form aufweist ist, wobei der Querschnitt des Gehäuses im Wesentlichen kreisförmig ist und die Öffnung (3) auf der Seite des Kegelstumpfs mit dem größeren Durchmesser angeordnet ist.

5. Verfahren gemäß einem der vorhergehenden Ansprüche, **dadurch gekennzeichnet, dass** das stapelbare Gehäuse (10), bevor es einem Stapel (14) zugeführt wird, an einer Station bearbeitet wird, die die Beschichtung seiner Innenseite und/oder seiner Außenseite ermöglicht unter Verwendung unterschiedlich behandelter Beschichtungen und insbesondere durch das Aufbringen von Werbebotschaften, Handelsmitteilungen oder vorschriftsmäßigen Mitteilungen oder Produktkennzeichnungen und insbesondere einer Kennzeichnung des Endbehälters, der anschließend, wie weiter unten beschrieben, hergestellt wird.

6. Verfahren gemäß einem der vorhergehenden Ansprüche, **dadurch gekennzeichnet, dass** es am Einlauf einer Füllmaschine aus Stapelpackungen unter der Verwendung einer Entstapelvorrichtung geladen wird.

7. Verfahren gemäß einem der vorhergehenden Ansprüche, **dadurch gekennzeichnet, dass** ein abzugebendes Produkt über ein dem stapelbaren Gehäuse zugeordnetes Abgabemittel injiziert wird.

8. Verfahren gemäß Anspruch 7, **dadurch gekennzeichnet, dass** mit dem Gehäuse als Verschlussmittel ein speziell für derartige Gehäuse ausgebildeter Ventilteller (62) fest verbunden wird, der aus einer Platte aus starrem Material hergestellt ist und der so gebildet ist, dass er sich durch Bördelung an den Rand der Öffnung (60c) des Gehäuses (60) anpasst, wobei die homologen Ränder des Ventiltellers (62) und des Gehäuses (60) zu ineinandergreifenden Halbkreisen (65, 63) gefalzt sind, die durch ein Dichtung aus Kunststoffmaterial (64) getrennt sind, wobei der Ventilteller dazu vorgesehen ist, mit einem Ventil (61) zum Aussprühen des Produkts ausgestattet zu werden, das in die Aerosoldose eingefüllt wird, nachdem der Ventilteller (62) mit dem Gehäuse (60) fest verbunden wurde.

9. Verfahren gemäß Anspruch 8, **dadurch gekennzeichnet, dass** eine Kappe oder ein Deckel zum Verschluss und/ oder Schutz des eigentlichen Ventils hergestellt wird, die oder der mit einem zusätzlichen Falz (66) zusammenwirkt, der es ermöglicht, die horizontale Dimension der Aerosoldose in der Zeichnung größer zu gestalten, so dass die Dicke der Kappe (67) dort aufgenommen werden kann.

10. Verfahren gemäß einem der Ansprüche 7 bis 9, **dadurch gekennzeichnet, dass** an dem stapelbaren Gehäuse (70) ein der Form eines Ventiltellers angepasster Teil (71) zur Aufnahme eines Ventils (73) gebildet ist.

11. Verfahren gemäß einem der Ansprüche 7 bis 10, **dadurch gekennzeichnet, dass** an dem stapelbaren Gehäuse (70) eine Öffnung (74) vorgesehen ist, deren Rand einen Bördelrand (75) zur Aufnahme eines gewölbten Verschlussdeckels (76) aufweist, wobei der Bördelrand (77) zur gegenseitigen Verbördelung mit einer zylindrischen Dichtung (79) aus einem Material, wie einem anfänglich fluiden Material zusammenwirkt, die als Abdichtung und/oder als Klebstoff zur dauerhaften Fixation dient.
